# FASCICULE DE BREVET EUROPEEN

(11) **EP 3 681 279 B1**
(45) Date de publication et mention de la délivrance du brevet: **28.07.2021**
(21) Numéro de dépôt: 18774098.0
(22) Date de dépôt: 06.09.2018
(51) Int. Cl.: A01M 21/00, A01M 21/04, A01G 23/06, A01G 7/06

(54) **PROCEDE DE DEVITALISATION DES VEGETAUX**
VERFAHREN ZUR VERNICHTUNG VON PFLANZEN
METHOD OF ERADICATION OF PLANTS

(30) Priorité: 12.09.2017 FR 1758416; 12.09.2017 FR 1758425
(43) Date de publication de la demande: 22.07.2020
(73) Titulaire: Arbeausolutions, 13720 Belcodene (FR)
(72) Inventeur: ZANETTI, Caroline, 13720 Belcodene (FR); LIENCY, Nelly, 13590 Meyreuil (FR); MACIA, Julie, 13300 Salon-De-Provence (FR); MORRIS, Cindly, 84450 Saint Saturnin-Les-Avignon (FR); PASCAL, Frédéric, 84210 Venasque (FR)
(74) Mandataire: Radzimski, Eric
(86) Numéro de dépôt international: PCT/FR2018/052169
(87) Numéro de publication internationale: WO 2019/053354

(56) Documents cités:
- EP-A1- 2 409 566
- WO-A1-2005/094574
- DE-A1- 1 582 678
- DE-C- 183 297
- FR-A1- 2 456 465
- US-A- 2 947 110
- US-A- 2 974 445
- US-A- 4 322 910

## Description

L'invention se place dans le domaine de la gestion des espaces végétalisés et particulièrement dans le domaine de l'éradication par dévitalisation des végétaux, particulièrement des végétaux indésirables, implantés ponctuellement, par exemple le long des infrastructures linéaires (voiries, canaux, réseaux ferroviaires, etc.) et autres espaces verts.

L'homme du métier sait que la dévitalisation d'un végétal entraine le desséchement des parties aérienne et racinaire.

L'utilisation des pesticides s'est généralisée depuis de nombreuses années aussi bien en agriculture que pour maitriser la végétation sur des surfaces non agricoles (jardins, parcs, infrastructures linéaires, etc.) où les enjeux ne sont plus vraiment sanitaires mais surtout paysagers et sécuritaires.

Ainsi, les herbicides et autres produits dévitalisants ont été privilégiés aux méthodes plus rudimentaires pour leurs nombreux avantages (faible coût, facilité d'application, rapidité et efficacité).

La végétation en bord de cours d'eau, naturels ou aménagés par l'homme, peut à terme poser des problèmes tels que la destruction des berges et la dégradation prématurée des ouvrages. Il est régulièrement nécessaire d'éradiquer ces végétaux afin de préserver l'intégrité des berges et des ouvrages.

Avec la montée de la prise de conscience de la dangerosité de certains produits phytopharmaceutiques les réglementations nationales se sont renforcées.

En France par exemple la parution de l'Arrêté du 12 septembre 2006 (NOR: AGRG0601345A), récemment remplacé par l'Arrêté du 4 mai 2017 relatif à la mise sur le marché et à l'utilisation des produits phytopharmaceutiques et de leurs adjuvants visés à l'article L253-1 du code rural et de la pêche maritime (NOR: AGRG1632554A), interdit l'emploi de produits phytopharmaceutiques à moins de 5 mètres des cours d'eau.

Face aux végétaux en cours de développement et pouvant générer des risques, il n'existe aujourd'hui que peu de solutions d'éradication.

La première solution envisagée par les gestionnaires est l'abattage des arbres. Cette méthode est la plus utilisée car elle ne nécessite pas de faire des travaux de réparation et n'entraine pas de coût trop élevé. Toutefois la simple coupe d'un arbre n'entraine pas toujours l'arrêt de sa croissance et sa mort. Certaines espèces sont connues pour se reproduire de manière végétative et une coupe renforce leur système racinaire. De nouveaux rejets issus de la souche et des drageons issus des racines risquent de faire leur apparition de manière plus ou moins fulgurante. Et dans le cas où l'arbre ne survit pas, la décomposition du système racinaire encore présent peut être à l'origine de dégâts encore plus importants et lourds de conséquence pour la sureté des ouvrages hydrauliques.

Une autre manière, élégante et non polluante, d'obtenir le desséchement d'un végétal, particulièrement un ligneux, est de maintenir sa frondaison dans l'obscurité jusqu'à son desséchement apparent.

Pour maintenir ledit végétal à l'abri de la lumière une solution évidente peut être de l'envelopper à l'aide de matériaux ne laissant pas passer la lumière et de manière le plus hermétique possible. Les processus végétatifs induits par la lumière et conduisant au développement du végétal ne pourront plus se réaliser et le végétal arrêtera sa croissance, dépérira et finira par sécher. Ledit matériau pourra être une toile une bâche, du bois, du métal ou tout autre matériau ne laissant pas passer la lumière.

Concernant les méthodes chimiques, le brevet DE1582678 décrit un procédé de dévitalisation par utilisation d'un herbicide, le brevet US2974445 décrit un procédé chimique comparable avec une étape d'écorcement et WO2005/094574 décrit un procédé de dévitalisation par introduction d'azote liquide.

D'autres méthodes mettant en œuvre des moyens mécaniques lourds comme le broyage des souches ou le dessouchage peuvent être envisagées. Le broyage des souches aboutit à des résultats identiques à l'abattage voire plus néfastes. En effet, la souche devenue non-visible après son broyage est bien souvent oubliée lors des inspections visuelles, alors que les racines latérales intactes poursuivent leur développement dans l'ouvrage (apparition de drageons) ou bien se décomposent.

Le dessouchage reste la solution la plus efficace : la partie aérienne est d'abord coupée avant de procéder à l'extraction de l'ensemble du système racinaire. Mais encore une fois il est très important que toutes les racines soient enlevées car l'oubli d'une partie du système racinaire peut entrainer la croissance de nouvelles pousses (drageons) ou générer des risques d'érosion interne après décomposition. De plus cette technique nécessite souvent la mise en œuvre de moyens mécaniques lourds qui génèrent des dégradations supplémentaires pouvant alors venir se surajouter aux problèmes posés par la présence des végétaux. Par exemple dans le cas d'ouvrages hydrauliques dont les berges peuvent être constituées de revêtements rigides, cette méthode curative implique la réalisation de travaux de destruction puis de réparation importants afin de maintenir l'étanchéité des ouvrages. *In-fine,* les zones de réparation représentent par la suite des zones sensibles (joints) où la végétation se développera plus facilement par rapport à des linéaires homogènes.

Enfin, un végétal peut aussi se dessécher à la suite d'autres causes comme par exemple une chaleur intense, une sècheresse prolongée, une électrisation, un foudroyage, une attaque de castor ou d'insectes.

Cependant l'expérience montre que si la frondaison et le tronc hors sol d'un végétal apparaissent desséchés, il s'avère que dans bien des cas la partie souterraine dudit végétal n'est pas complétement morte et permet alors l'émergence de rejets, particulièrement à la base de la partie aérienne desséchée.

On peut évidemment envisager, de renouveler l'étape ayant conduit à l'apparent desséchement du végétal, comme par exemple occulter de nouveau la zone où sont apparus les rejets et attendre leur dessèchement. Mais là encore la partie souterraine pourrait ne pas être totalement morte et de nouveaux rejets pourraient encore apparaitre.

On comprend de ce qui précède que les solutions existantes pour remplacer l'éradication chimique des végétaux sont peu efficaces et/ou génératrices d'autres conséquences pouvant rendre l'opération inefficace.

Il devient donc nécessaire de trouver de nouveaux procédés d'éradication par dévitalisation des végétaux et particulièrement des végétaux ligneux, ayant un impact environnemental réduit et maitrisé voire nul, qui ne fassent pas intervenir de produits phytopharmaceutiques et/ou leurs adjuvants interdits par les lois et règlements nationaux et/ou internationaux, et avantageusement qui ne fassent pas intervenir de moyens mécaniques de grande ampleur afin de conserver l'intégrité des sols et des ouvrages.

C'est un des objectifs de la présente invention que de proposer un tel procédé de dévitalisation des végétaux, particulièrement des végétaux ligneux.

Ainsi l'invention a pour objet premier un procédé de dévitalisation d'un végétal, avantageusement ligneux, caractérisées en ce que :
- Dans une première étape l'écorce dudit végétal, avantageusement ligneux, peut être retirée sur une zone préalablement élaguée, sur tout ou partie du périmètre du tronc dudit végétal, avantageusement sur la totalité du pourtour du tronc ;
- Dans une deuxième étape
   ∘ soit ladite zone écorcée peut être mise en contact avec une solution aqueuse anti-cicatrisante, la zone ainsi traitée pouvant être recouverte de manière hermétique et ladite solution aqueuse anti-cicatrisante pouvant être laissée en contact dudit végétal un temps suffisant pour empêcher la cicatrisation de ladite zone traitée et contribuer au processus de dévitalisation ;
   ∘ soit la température de ladite zone écorcée peut être abaissée à une température comprise entre -10°C et -50°C, préférentiellement entre -20°C et - 40°C très préférentiellement entre -25°C et -35°C.

L'homme du métier comprend que ces étapes préalables peuvent à elles seules constituer un procédé suffisant pour obtenir une dévitalisation totale et suffisante du végétal traité et peuvent ainsi donc être utilisées seules.

Selon ce mode de réalisation particulier du procédé selon l'invention, celui-ci peut en outre comprendre au moins une troisième étape dans laquelle :
a. si à la deuxième étape l'application d'une solution aqueuse anti-cicatrisante sur ladite zone écorcée a été choisie, alors la température de ladite zone écorcée et traitée peut être abaissée à une température comprise entre -10°C et -50°C, préférentiellement entre -20°C et -40°C, très préférentiellement entre -25°C et -35°C ;
b. si à la deuxième étape la température de ladite zone écorcée a été abaissée à une température comprise entre -10°C et -50°C, préférentiellement entre -20°C et -40°C très préférentiellement entre -25°C et -35°C, alors ladite zone écorcée refroidie peut être mise en contact avec une solution aqueuse anti-cicatrisante, ladite zone traitée pouvant être recouverte de manière hermétique et ladite solution aqueuse anti-cicatrisante pouvant être laissée en contact dudit végétal un temps suffisant pour empêcher la cicatrisation de ladite zone.

Lorsque la troisième étape est réalisée selon l'option a) ci-dessus décrite, elle a pour but non seulement de refroidir la zone préalablement traitée à la deuxième étape par application d'une solution aqueuse anti-cicatrisante sur ladite zone écorcée mais également d'éradiquer par le froid les éventuels rejets qui auraient pu apparaitre en dessous de la partie du végétal préalablement traitée, c'est-à-dire entre la partie basse de ladite zone écorcée et le sol. L'abaissement de la température de ladite zone écorcée pourra alors être pratiqué sur la zone préalablement traitée mais aussi, avantageusement directement, sur les éventuels rejets qui auraient pu apparaitre.

Selon l'invention l'élagage peut être réalisé en coupant au plus proche du tronc les branches situées dans la zone du tronc choisie pour l'écorçage à réaliser. Tout moyen connu peut être utilisé pour réaliser l'élagage, l'homme du métier n'aura aucun mal à déterminer le moyen le plus efficace adapté à la situation à laquelle il fait face, comme par exemple l'utilisation d'un sécateur ou d'une scie à bois.

Ladite zone du tronc à traiter peut être élaguée sur la totalité ou sur une partie seulement du périmètre du tronc du végétal à traiter. Préférentiellement la zone à élaguer peut couvrir la totalité du périmètre du tronc du végétal à traiter.

Cette zone du tronc (zone élaguée) peut s'étendre de la jonction entre le végétal et le sol sur une hauteur pouvant être comprise entre 10 cm et 1 m à partir du sol, de préférence comprise entre 20 et 50 cm, très préférentiellement entre 25 et 35 cm.

Une fois élaguée ladite zone du tronc du végétal à traiter peut être écorcée.

Selon l'invention l'écorçage de ladite zone du tronc à traiter peut être réalisé sur la totalité ou sur une partie seulement du périmètre du tronc du végétal à traiter, préférentiellement sur la totalité, et/ou sur la totalité ou sur une partie seulement de la hauteur de la zone élaguée.

Préférentiellement l'écorçage peut être réalisé sur la totalité du périmètre du tronc du végétal à traiter et sur la totalité de la hauteur de la zone élaguée.

Selon l'invention l'écorçage peut être réalisé sur la zone élaguée de la jonction entre le végétal et le sol sur une hauteur pouvant être comprise entre 10 cm et 1 m à partir du sol, de préférence comprise entre 20 et 50 cm, très préférentiellement entre 25 et 35 cm.

Selon l'invention l'écorçage peut être réalisé par élimination des différentes couches constituant le végétal à traiter à partir de l'extérieur vers l'intérieur du tronc jusqu'à atteindre le xylème. Avantageusement selon l'invention l'écorçage peut être réalisé jusqu'à y compris le cambium.

Préférentiellement selon l'invention l'écorçage peut être réalisé jusqu'à élimination complète du cambium, encore plus préférentiellement réalisé jusqu'à élimination complète du cambium sans atteinte physique du xylème.

Tout moyen connu peut être utilisé pour réaliser l'écorçage, l'homme du métier n'aura aucun mal à déterminer le moyen le plus efficace adapté à la situation à laquelle il fait face.

Par exemple afin de réaliser l'écorçage il peut être possible de réaliser une entaille dans le végétal à écorcer à l'aide d'un outil tranchant (plane, écorçoir, couteau, etc.) puis les tissus ligneux peuvent être soulevés afin de les retirer depuis l'écorce jusqu'au cambium, avantageusement sans endommager le xylème.

Très préférentiellement selon l'invention l'écorçage peut être réalisé jusqu'à élimination totale de l'ensemble des tissus considérés sans atteinte du xylème.

L'homme du métier saura sans difficulté déterminer le tissu correspondant au xylème soit visuellement soit en touchant la zone qui doit être lisse et humide juste après l'opération.

De manière préférentielle la première étape du procédé selon l'invention peut être réalisée par écorçage d'une surface du tronc du végétal à traiter préalablement élaguée, pouvant s'étendre du sol jusqu'à une hauteur comprise entre 25 et 35 cm, sur la totalité du périmètre du tronc dudit végétal à traiter par élimination des couches successives de tissus végétaux de la périphérie vers l'intérieur jusqu'à atteindre le xylème sans toutefois porter atteinte ni éliminer celui-ci.

Selon l'invention une première variante de la deuxième étape du procédé peut consister en la mise en contact d'une solution aqueuse anti-cicatrisante avec ladite zone écorcée dudit végétal à traiter.

Par mise en contact on entend selon l'invention qu'une solution aqueuse anti-cicatrisante peut être déposée par tout moyen connu à la surface de la zone mise à nu par l'écorçage réalisé à la première étape, afin de recouvrir tout ou partie de ladite zone écorcée.

On comprend donc que selon l'invention ladite solution aqueuse anti-cicatrisante peut être mise en contact avec le xylème.

Selon l'invention ladite solution aqueuse anti-cicatrisante peut être une solution choisie parmi une :
- Solution aqueuse (A) comprenant entre 0,1% et 20%, préférentiellement entre 1% et 15%, très avantageusement entre 2% et 10% d'acide, (par ailleurs nommée dans le présent texte "solution aqueuse acide (A)") ;
- Solution aqueuse comprenant des sels minéraux (B), avantageusement une solution aqueuse saline saturée en sels minéraux ;
- Solution composée du mélange des deux solutions précédentes (A+B).

Selon une première variante de l'invention ladite solution anti-cicatrisante peut être une solution aqueuse acide (A) qui peut comprendre de l'eau et au moins un acide pouvant être pris seul ou en mélange, choisi parmi, l'acide lactique (C₃H₆O₃), l'acide citrique (C₆H₈O₇), l'acide abscissique (C₁₅H₂₀O₄), l'acide méthanoïque (CH₂O₂), l'acide acétique (CH₃COOH), l'acide salicylique (C₇H₆O₃), l'acide nonanoïque (C₉H₁₈O₂), l'acide butyrique (C₄H₈O₂), l'acide benzoïque (C₇H₆O₂), l'acide hypochloreux (HOCl), l'acide borique (H₃BO₃), l'acide sulfureux (H₂SO₃), avantageusement de l'acide lactique, de l'acide citrique ou de l'acide acétique ou de l'acide lactique, très avantageusement de l'acide acétique ou de l'acide lactique, encore plus avantageusement de l'acide acétique, en une proportion pouvant être comprise entre 0,1% et 20%, préférentiellement entre 1% et 15%, très avantageusement entre 2% et 10% d'acide. Sans indication contraire dans le présent texte les pourcentages sont donnés volume/volume.

Selon une forme préférée ladite solution aqueuse acide (A) peut être du lait ou du vinaigre, d'alcool ou de fruit, avantageusement d'alcool. Dans ce cas l'acide acétique peut être dans ladite solution aqueuse acide (A) constituée par le vinaigre, en une proportion pouvant être comprise entre 2% et 15%, préférentiellement entre 4% et 12%, très avantageusement entre 6% et 10%.

Selon l'invention, ladite solution aqueuse acide (A) peut avoir un pH compris entre 1 et 6,9, préférentiellement entre 2 et 5, très avantageusement entre 2,8 et 3.

Selon une deuxième variante de l'invention ladite solution anti-cicatrisante peut être une solution aqueuse saline (B) comprenant au moins un sel minéral, pouvant être choisi parmi le Calcium (Ca), le Fer (Fe), le Magnésium (Mg), le Phosphore (P), le Potassium (K), le Sodium (Na), le Souffre (S), l'Aluminium (Al), l'Arsenic (As), le Bore (B), le Brome (Br), le Chlore (Cl), le Chrome (Cr), le Cobalt (Co), le Cuivre (Cu), le Fluor (F), l'Iode (I), le Manganèse (Mn), le Molybdène (Mo), le Nickel (Ni), le Plomb (Pb), le Silicium (Si), le Sélénium (Se), le Vanadium (V), le Zinc (Zn), le Plutonium (Pu).

Préférentiellement selon l'invention ledit sel minéral peut être choisi parmi le Calcium (Ca), le Magnésium (Mg), le Potassium (K), le Sodium (Na), le Chlore (Cl) ou encore l'Iode (I). Très préférentiellement ledit sel minéral peut être du Sodium (Na), du Chlore (Cl) ou encore du Potassium, encore plus préférentiellement ledit sel minéral peut être du Sodium (Na).

Avantageusement selon l'invention, ledit sel minéral peut être présent dans ladite solution aqueuse saline sous la forme de couple cation/anion formant un sel neutre ledit sel minéral pouvant être choisi parmi les sels cités précédemment, avec les mêmes préférences.

Selon une forme de l'invention ladite solution aqueuse saline saturée en sels minéraux peut comprendre le mélange d'au moins un sel minéral et de sa forme en couple cation/anion formant un sel neutre.

Selon une autre forme de l'invention ladite solution aqueuse saline saturée en sels minéraux peut comprendre le mélange de plusieurs sels minéraux et de leurs formes en couple cation/anion formant un sel neutre.

Selon encore une autre forme de l'invention ladite solution aqueuse saline saturée en sels minéraux peut comprendre le mélange d'au moins un sel minéral et d'au moins un autre sel minéral sous sa forme en couple cation/anion formant un sel neutre.

Très préférentiellement selon l'invention ladite solution aqueuse saline saturée en sels minéraux peut comprendre exclusivement au moins un sel minéral en couple cation/anion formant un sel neutre.

Bien entendu selon l'invention ladite solution aqueuse saline saturée en sels minéraux peut comprendre exclusivement plusieurs sels minéraux sous la forme de couples cation/anion formant un sel neutre.

Selon l'invention le couple cation/anion formant un sel neutre peut être à une concentration comprise entre 1/3 de la quantité nécessaire à la saturation et la saturation, préférentiellement entre 2/3 de la quantité nécessaire à la saturation et la saturation, très préférentiellement à saturation.

Par saturation on entend dans le présent texte la concentration, exprimée en g/L, à partir de laquelle ledit couple cation/anion formant un sel neutre ne peut se dissoudre dans l'eau à une température donnée, généralement 20°C ou 25°C.

Préférentiellement selon l'invention ladite solution aqueuse saline peut être saturée.

Selon l'invention à titre d'exemple ledit couple cation/anion formant un sel neutre peut être choisi parmi les couples Chlorure de Sodium (NaCl), Chlorure de Calcium (CaCl₂), Chlorure de potassium (KCl), Chlorure de magnésium (MgCl₂), Iodure de Sodium (Nal), Iodure de Potassium (Kl), Bicarbonate de Sodium (NaHCo₃), préférentiellement du Chlorure de Sodium (NaCl) ou du chlorure de Potassium (KCl), très préférentiellement du Chlorure de Sodium (NaCl).

A titre d'exemple le tableau suivant donne la valeur (en g·L⁻¹) de la concentration de saturation dans l'eau à la température indiquée pour certains couples cation/anion formant un sel neutre utilisables selon l'invention.

| couple cation/anion | Saturation (en g·L⁻¹) |
|---|---|
| NaCl | 358,5 à 20°C |
| CaCl₂ | 745 à 20°C |
| Nal | 1840 à 25°C |
| KCl | 360 à 25°C |
| MgCl₂ | 542 à 20°C |
| Kl | 1430 à 20°C |
| NaHCo₃ | 87 à 20°C |

Selon une troisième variante de l'invention ladite solution anti-cicatrisante peut être un mélange des deux solutions précédentes, à savoir un mélange d'une solution aqueuse acide (A) et d'une une solution aqueuse saline (B), en un rapport A/B (vol/vol) comprise entre 1/99 et 99/1, préférentiellement entre 25/75 et 75/25, encore plus préférentiellement 50/50.

A titre d'exemple ladite solution anti-cicatrisante sous forme d'un mélange d'une solution aqueuse acide (A) et d'une solution aqueuse saline (B) peut être choisie parmi le mélange d'une solution aqueuse à base d'acide acétique (A) et d'une solution aqueuse saline (B) comprenant le couple NaCl, ou encore du mélange d'une solution aqueuse à base d'acide citrique (A) et d'une solution aqueuse saline (B) comprenant le couple MgCl₂, ou encore du mélange d'une solution aqueuse à base d'acide citrique (A) et d'une solution aqueuse saline (B) à base de KCI, ou encore d'une solution aqueuse à base d'acide lactique et d'une solution aqueuse saline (B) à base de NaHCo₃.

De manière préférée selon l'invention, ladite solution anti-cicatrisante peut être un mélange d'une solution aqueuse acide (A) et d'une solution aqueuse saline (B) en un rapport 50/50, avec une solution aqueuse à base d'acide acétique (A) à 6%, au pH compris entre 2,8 et 3, et avec une solution aqueuse saline (B) comprenant le couple NaCl à saturation (358,5 g·L⁻¹ à 20°C).

La mise en contact de la solution anti-cicatrisante pratiquée à la deuxième étape peut être réalisée par toute méthode connue de l'homme du métier comme par exemple un badigeonnage.

Avantageusement la mise en contact de la solution anti-cicatrisante avec le xylème du végétal à dévitaliser peut se faire par application d'un pansement imbibé de ladite solution sur tout ou partie de la surface du végétal écorcée à la première étape, avantageusement sur toute la surface. Ledit pansement peut être du papier, avantageusement sur plusieurs épaisseurs, du tissu, avantageusement sur plusieurs épaisseurs, un matériau spongieux, avantageusement sur plusieurs épaisseurs ou encore du papier absorbant, avantageusement sur plusieurs épaisseurs. Préférentiellement selon l'invention ledit pansement peut être du papier absorbant sur plusieurs épaisseurs.

Selon l'invention, la zone traitée avec la solution anti-cicatrisante peut être recouverte de manière hermétique pour former un bandage hermétique afin de ralentir tant que faire se peut l'évaporation de la solution aqueuse anti-cicatrisante appliquée à la deuxième étape. Ce bandage hermétique présente également l'avantage d'éviter que ladite solution aqueuse anti-cicatrisante ne se répandre dans l'environnement non ciblé.

Ledit bandage hermétique peut être réalisé à l'aide de tout matériau étanche suffisamment flexible pour pouvoir être appliqué autour de la zone écorcée dudit végétal à traiter. Ledit matériau peut être appliqué autour de ladite zone écorcée dudit végétal à traiter en maintenant entre lui et le xylème ladite solution anti-cicatrisante.

Selon une variante préférée ledit matériau étanche peut être appliqué autour de ladite zone écorcée dudit végétal à traiter en maintenant entre lui et le xylème ledit pansement imbibé de ladite solution anti-cicatrisante.

Selon l'invention ledit matériau étanche peut être du film plastique, du film étirable, de la bâche, de la toile goudronnée, du ruban adhésif, préférentiellement du film étirable, comme celui vendu par exemple sans limitation par Exbanor (FR), Plasticband (ES) ou encore Strapex (Fr).

Une fois posé ledit pansement sera fixé audit végétal à traiter par tout moyen connu de l'homme du métier. Par exemple il peut être collé avec de la colle ou un ruban adhésif, par exemple de type Chatterton, ou encore agrafé.

Préférentiellement ledit pansement sera fixé audit végétal à l'aide d'un un film étirable. Si ledit matériau étanche est un film étirable autocollant il peut par étirement et application autour du tronc dudit végétal à traiter se maintenir tout seul autour dudit tronc ou encore être maintenu autour du tronc dudit végétal à traiter à l'aide par exemple de ruban adhésif.

Selon l'invention le procédé peut être mis en oeuvre un temps suffisant pour que la solution aqueuse anti-cicatrisante agisse. On comprend ici que le temps de mise en oeuvre dudit procédé peut dépendre de la résistance dudit végétal à traiter à la dévitalisation par ladite solution aqueuse anti-cicatrisante utilisée, résistance qui peut dépendre de la nature dudit végétal, de son stade de croissance (juvénile, adulte ou sénescent), de son état sanitaire ou encore de sa taille. En fait c'est une surveillance attentive de l'état de dévitalisation dudit végétal, particulièrement de ses parties aériennes, qui permettra d'évaluer au cours du temps l'état d'avancement de ladite dévitalisation. L'homme du métier saura sans difficulté déterminer si ledit végétal à traiter est suffisamment dévitalisé ou si la mise en oeuvre dudit procédé doit être poursuivie.

On comprend ainsi que le temps de mise en oeuvre du procédé selon l'invention peut être long et que de ce fait il peut être nécessaire de réappliquer la solution aqueuse anti-cicatrisante sur le xylème.

Ainsi selon une autre variante de l'invention ledit procédé peut comprendre une ou plusieurs étapes de recharges en solution aqueuse anti-cicatrisante. Cette (ou ces) recharge(s) peut (peuvent) se faire au cours de la deuxième étape du procédé selon l'invention par tout moyen connu comme par exemple l'injection de ladite de solution au travers dudit pansement occultant en un ou plusieurs points dudit pansement. Là encore l'homme du métier saura sans difficulté déterminer le moyen le plus efficace à utiliser pour réaliser la recharge en solution aqueuse anti-cicatrisante. Une recharge par injection au travers dudit pansement peut être préférée.

De même l'homme du métier saura sans difficulté déterminer le nombre de recharges à réaliser et la quantité de solution aqueuse anti-cicatrisante à utiliser.

Selon une autre variante de la deuxième étape du procédé selon l'invention la température de ladite zone écorcée peut être abaissée à une température comprise entre -10°C et -50°C, préférentiellement entre -20°C et -40°C très préférentiellement entre -25°C et -35°C.

Selon l'invention cette étape de refroidissement de ladite zone écorcée peut être réalisée par tout moyen connu de l'homme du métier qui permette de maintenir la zone traitée à la température souhaitée pendant un temps suffisant.

Selon l'invention cette étape de refroidissement de ladite zone écorcée peut être réalisée en une seule fois ou en plusieurs fois séparées par un temps de remontée en température compris entre 1 heure et 1 mois, préférentiellement 15 jours. Lorsque ladite étape de refroidissement de ladite zone écorcée est réalisée en plusieurs fois séparées par un temps de remontée en température le nombre de fois durant lesquels le végétal peut être soumis au refroidissement peut être laissé à l'appréciation de l'homme du métier et être compris entre 2 et 10 fois. Mais avantageusement ce nombre de fois peut être compris entre 2 et 4 fois et très préférentiellement peut être de 2 fois.

On comprend que la durée de cette étape, qu'elle soit réalisée en une ou plusieurs fois, peut dépendre de l'espèce végétale considérée, de la taille dudit végétal et éventuellement des conditions environnementales subies.

Selon l'invention cette étape de refroidissement de ladite zone écorcée peut être réalisée pendant un temps total compris entre 1 minute et 180 minutes, préférentiellement entre 10 minutes et 150 minutes, très préférentiellement entre 30 minutes et 120 minutes. On comprend donc que si ladite étape de refroidissement de ladite zone écorcée est réalisée en plusieurs fois la durée de chaque sous-étape sera compatible avec le fait que la somme des durées des sous-étapes de refroidissement de ladite zone écorcée soit comprise entre 1 minutes et 180 minutes, préférentiellement entre 10 minutes et 150 minutes, très préférentiellement entre 30 minutes et 120 minutes. A titre d'exemple une sous-étape de refroidissement de ladite zone écorcée peut avoir une durée comprise entre 1 à 60 minutes, préférentiellement entre 10 à 45 minutes, très préférentiellement de 30 minutes. A titre d'exemple de moyen réalisé pour refroidir ladite zone écorcée on peut citer l'application de neige carbonique, d'azote liquide, ou encore à l'aide d'un appareil connu des plombiers sous la dénomination de gel-tube comme par exemple ceux de la marque ROTHENBERGER (France) ou de la marque RHEMS (Allemagne).

Préférentiellement selon l'invention l'étape de refroidissement de ladite zone écorcée peut être réalisée à l'aide d'un gel-tube.

Selon une forme préférée de l'invention le procédé peut comprendre une troisième étape qui peut être
∘ soit une étape de refroidissement de ladite zone écorcée à une température comprise entre -10°C et -50°C, préférentiellement entre -20°C et -40°C, très préférentiellement entre -25°C et -35°C telle que décrite précédemment, si à la deuxième étape une solution aqueuse anti-cicatrisante a été appliquée sur la zone écorcée ;
∘ soit une étape de mise en contact avec une solution aqueuse anti-cicatrisante, ladite zone traitée étant recouverte de manière hermétique et ladite solution aqueuse anti-cicatrisante étant laissée en contact dudit végétal un temps suffisant pour empêcher la cicatrisation de ladite zone tel que cela est décrit précédemment dans le présent texte, si à la deuxième étape la température de ladite zone écorcée a été abaissée à une température comprise entre -10°C et -50°C, préférentiellement entre -20°C et -40°C très préférentiellement entre -25°C et -35°C.

Selon l'invention la première et la deuxième étape peuvent être réalisées successivement dans un temps court par exemple entre 5 minutes et 2 heures.

Ladite troisième étape peut intervenir immédiatement après la réalisation des première et deuxième étapes ou préférentiellement après un temps suffisant pour que l'effet de la réalisation des première et deuxième étapes apparaisse sur le végétal traité.

On comprend donc que la troisième étape peut être réalisée après la deuxième étape dans un temps se situant entre 10 minutes et 2 ans. C'est l'homme du métier qui décidera du temps séparant la deuxième et la troisième étape en fonction de l'évolution du végétal après la réalisation des deux premières étapes du traitement.

De ce qui précède on comprend que les étapes de mise en contact du xylème avec une solution anti-cicatrisante ou de refroidissement de la zone écorcée, qu'elles soient réalisées en deuxième ou troisième étape du procédé selon l'invention, peuvent être réitérées autant de fois que l'homme du métier jugera utile de les reconduire.

Cependant comme on l'a vu précédemment l'apparent desséchement des parties aériennes du végétal ne garantit pas la mort complète de celui-ci. Les parties souterraines peuvent encore être vivantes et se développer en induisant par exemple une croissance du réseau racinaire et/ou l'apparition de rejets ou drageons en surface.

C'est pourquoi il faut envisager une nouvelle intervention afin d'éradiquer les rejets et de tuer le réseau racinaire persistant.

Ainsi selon une autre variante du procédé selon l'invention celui-ci peut comporter en outre au moins une étape au cours de laquelle la température des rejets apparus sur ledit végétal préalablement desséché et/ou coupé peut être abaissée à une température comprise entre -10°C et -50°C, préférentiellement entre -20°C et -40°C très préférentiellement entre -25°C et -35°C.

Par "desséché" on entend dans le présent texte que le végétal auquel le procédé selon l'invention va être appliqué présente un état sanitaire tel que la partie aérienne de l'arbre présente un feuillage mort et sec, un bois complètement déshydraté et cassant, éventuellement la présence de champignons filamenteux et duveteux. L'homme du métier n'a aucun mal à comprendre cette expression et à déterminer l'état sanitaire du végétal à traiter.

Par "préalablement" on entend dans le présent texte que le végétal auquel s'applique l'invention est apparemment desséché, que son desséchement soit d'origine naturelle ou provoqué par la main de l'homme.

Par "coupé" on entend dans le présent texte que le végétal auquel le procédé selon l'invention va être appliqué a été coupé entre 0 et 1 m, préférentiellement entre 0 et 50 cm au-dessus de la surface du sol. Cette notion s'applique aussi bien au tronc dudit végétal qu'aux rejets ou drageons.

Selon l'invention lesdits rejets peuvent être idéalement conservés sur pied ou préalablement coupés, avantageusement au ras du tronc dudit végétal.

Préférentiellement selon l'invention lesdits rejets pourront ne pas être coupés.

Si l'élagage desdits rejets est choisi celui-ci peut être réalisé en coupant lesdits rejets au plus proche du tronc. Tout moyen connu peut être utilisé pour réaliser l'élagage, l'homme du métier n'aura aucun mal à déterminer le moyen le plus efficace adapté à la situation à laquelle il fait face, comme par exemple l'utilisation d'un sécateur ou d'une scie à bois.

Si lesdits rejets ne sont pas coupés ils peuvent être traités individuellement ou de manière groupée en un ou plusieurs bouquet(s). Préférentiellement selon l'invention lesdits rejets pourront être traités de manière groupée en un ou plusieurs bouquet(s).

Selon l'invention l'étape d'abaissement de la température pratiquée sur les rejets apparus sur ledit végétal préalablement desséché et/ou coupé peut être réalisée par tout moyen connu de l'homme du métier qui permette de maintenir la zone traitée à la température souhaitée pendant un temps suffisant.

Selon l'invention cette étape d'abaissement de la température des rejets peut être réalisée en une seule fois ou en plusieurs fois séparées par un temps de remontée en température compris entre 1 heure et 1 mois, préférentiellement 15 jours. Lorsque ladite étape d'abaissement de la température des rejets est réalisée en plusieurs fois séparées par un temps de remontée en température, le nombre de fois durant lesquels lesdits rejets dudit végétal peuvent être soumis au refroidissement peut être laissé à l'appréciation de l'homme du métier et être compris entre 2 et 10 fois. Mais avantageusement ce nombre de fois peut être compris entre 2 et 4 fois et très préférentiellement peut être de 2 fois.

On comprend que la durée de cette étape, qu'elle soit réalisée en une ou plusieurs fois, peut dépendre de l'espèce végétale considérée, de la taille dudit végétal et éventuellement des conditions environnementales subies.

Selon l'invention cette étape d'abaissement de la température des rejets peut être réalisée pendant un temps total compris entre 1 minute et 180 minutes, préférentiellement entre 10 minutes et 150 minutes, très préférentiellement entre 30 minutes et 120 minutes. On comprend donc que si ladite étape d'abaissement de la température des rejets est réalisée en plusieurs fois la durée de chaque sous étape sera compatible avec le fait que la somme des durées des sous-étapes d'abaissement de la température soit comprise entre 1 minutes et 180 minutes, préférentiellement entre 10 minutes et 150 minutes, très préférentiellement entre 30 minutes et 120 minutes. A titre d'exemple une sous-étape d'abaissement de la température desdits rejets peut avoir une durée de 1 à 60 minutes, préférentiellement de 10 à 45 minutes, très préférentiellement de 30 minutes.

A titre d'exemple de moyen utilisable pour refroidir lesdits rejets on peut citer l'application de neige carbonique, d'azote liquide, ou encore à l'aide d'un appareil connu des plombiers sous la dénomination de gel-tube comme par exemple ceux de la marque ROTHENBERGER (France) ou de la marque RHEMS (Allemagne).

Préférentiellement selon l'invention l'étape d'abaissement de la température des rejets peut être réalisée à l'aide d'un gel-tube.

Ladite étape d'abaissement de la température des rejets apparus sur ledit végétal préalablement desséché et/ou coupé peut être réitérée autant de fois que l'homme du métier jugera utile de la reconduire.

L'homme du métier comprend que cette étape d'éradication des rejets peut à elle seule constituer un procédé suffisant pour obtenir une dévitalisation totale et suffisante d'un végétal desséché, naturellement ou non, mais présentant une reviviscence au travers de rejets et/ou d'accroissement de son réseau racinaire, et peuvent ainsi donc être utilisée seule.

Selon encore un autre mode de réalisation particulier de l'invention le procédé selon l'invention peut comprendre d'abord les étapes de desséchement dudit végétal suivies de l'étape d'éradication des rejets et ce afin d'obtenir la mort complète et définitive dudit végétal. Ainsi selon cette variante, les étapes de dévitalisation du végétal décrites précédemment peuvent venir avant l'étape d'éradication des rejets apparus sur le végétal préalablement desséché par lesdites étapes de dévitalisation.

Ainsi selon ce mode de réalisation particulier l'invention a pour objet un procédé de dévitalisation d'un végétal, avantageusement ligneux, caractérisé en ce que
- Dans une première étape l'écorce dudit végétal est retirée sur une zone préalablement élaguée, sur tout ou partie du périmètre du tronc dudit végétal ;
- Dans une deuxième étape
   ∘ soit ladite zone écorcée est mise en contact avec une solution aqueuse anti-cicatrisante, la zone ainsi traitée étant recouverte de manière hermétique et ladite solution aqueuse anti-cicatrisante étant laissée en contact dudit végétal un temps suffisant pour empêcher la cicatrisation de ladite zone traitée et contribuer au processus de dévitalisation ;
   ∘ soit la température de ladite zone écorcée est abaissée à une température comprise entre -10°C et -50°C, préférentiellement entre -20°C et -40°C très préférentiellement entre -25°C et -35°C.
   et en ce que lorsque le végétal, avantageusement ligneux, est suffisamment desséché, alors la température des rejets apparus sur ledit végétal préalablement desséché et/ou coupé peut être abaissée à une température comprise entre -10°C et -50°C, préférentiellement entre -20°C et -40°C très préférentiellement entre -25°C et -35°C.

Bien entendu les différents aspects de chaque étape du procédé de cette variante sont les mêmes que ceux décrits précédemment dans le présent texte et peuvent s'appliquer aux étapes du procédé de cette variante.

D'autres aspects de l'invention peuvent apparaitre à la lecture des figures et des exemples suivants.

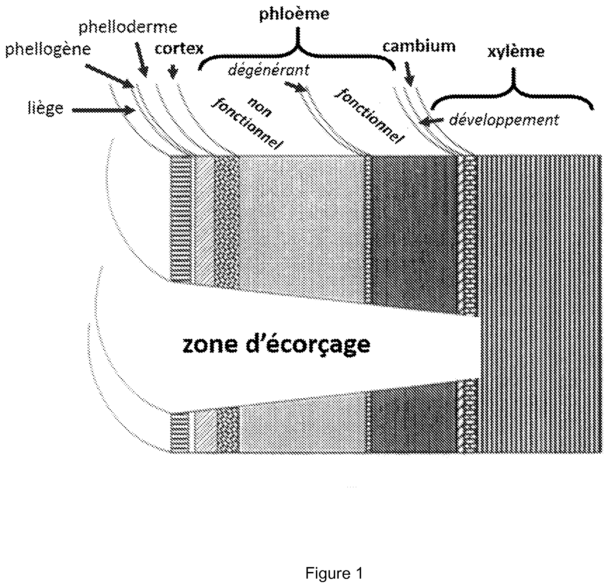

La figure 1 représente une coupe schématique d'un tronc d'un végétal montrant les différentes couches tissulaires constituant le tronc (d'après Noel, A.R.A., 1970, The girdled tree, Botanical Revue, 36:162-195) ainsi qu'un schéma de la zone d'écorçage à pratiquer selon l'invention.

Par observation de la figure 1 on note de gauche à droite les tissus d'un végétal ligneux constituant l'écorce (liège, phellogène, phelloderme, cortex, phloème), une assise libéro-ligneuse (cambium) puis l'aubier (xylème) constituant le bois avec le duramen (tissus morts non représentés sur la figure 1) plus au centre. Le xylème et le phloème sont des tissus conducteurs de sève, le xylème conduit la sève brute composée d'eau et de sels minéraux uniquement dans un sens ascendant (sens unidirectionnel), depuis les racines vers les parties aériennes de la plante tandis que le phloème conduit la sève élaborée composée de sucres (issus de la photosynthèse) vers les racines ainsi que les autres organes de la plante (sens bidirectionnel). La partie de la figure référencée "zone d'écorçage" montre les différents tissus qu'il faut enlever à la première étape du procédé selon l'invention. L'écorçage de ces tissus coupe la circulation des sucres nécessaires au bon développement de la plante et permet d'accéder au xylème pour la seconde étape du procédé selon l'invention.

**Exemple 1.** Dévitalisation d'un robinier faux-acacia par gel :
Un robinier de 3 m de haut et de 15 cm de diamètre à sa base, préalablement desséché par occultation de la lumière dont la frondaison ne présente plus que quelques feuilles, un tronc et des branches sèches, présente à sa base, c'est-à-dire au ras du sol des rejets de diamètre compris entre 1 mm et 2,5 cm.

Afin de les éradiquer, lesdits rejets sont enserrés dans la pince d'un gel tube et la température desdits rejets (individuellement ou en bouquet) est abaissée à -35°C pendant 60 minutes. On laisse alors la température remonter pendant une semaine puis on abaisse de nouveau la température de la zone à -35°C pendant 60 minutes.

Un suivi visuel de l'état sanitaire de l'arbre est alors réalisé une fois par mois pendant une année à 2 années.

Au bout d'une année on constate que plus aucune feuille ni plus aucun rejet ou drageon ne sont apparus sur l'arbre.

L'arbre est alors dévitalisé.

**Exemple 2 :** Dévitalisation d'un saule par gel :
Une procédure identique à celle de l'exemple 1 est réalisée sur un saule de 10 cm de diamètre et d'environ 2 m de haut ayant été coupé à la base. Le bouquet de rejet s'étant développé suite à la coupe est enserré dans la pince d'un gel tube. La température desdits rejets (en bouquet) est abaissée à -35°C pendant 120 minutes.

La dévitalisation de l'arbre est constatée après 10 semaines de traitement.

**Exemple 3 :** Dévitalisation d'un peuplier par mise en contact du xylème avec du vinaigre :
Sur un peuplier de 1,5 m de haut et de 5 cm de diamètre à sa base, on coupe au plus ras du tronc à l'aide d'un sécateur les branches depuis le sol jusqu'à 50 cm au-dessus du sol.

Dans cette zone élaguée sur une zone s'étendant depuis le sol jusqu'à 30 cm de hauteur et sur la totalité du périmètre de l'arbre, on retire méticuleusement les tissus constituant l'écorce et le cambium à l'aide d'une plane afin de faire apparaitre sur la totalité de la zone le xylème dont l'aspect est lisse et humide juste après écorçage. L'écorçage est réalisé de manière méticuleuse afin de ne pas laisser de tissu autre que le xylème.

Dès l'écorçage terminé, la zone écorcée est recouverte de plusieurs couches de papier absorbant imbibées à saturation (c'est-à-dire jusqu'à ce que ledit papier absorbant ne retienne plus de liquide) de vinaigre de vin rouge à 6% et dont le pH est compris entre 2,8 et 3.

Le papier absorbant saturé de vinaigre est alors recouvert d'un film étirable sur plusieurs épaisseurs de manière à protéger le papier absorbant imbibé et afin d'éviter que la solution acide ne se propage dans l'environnement et s'évapore. Les parties inférieure et supérieure de ce pansement sont alors recouvertes de ruban adhésif de type Chatterton afin d'obturer sur tout le pourtour de l'arbre la zone de jonction entre l'arbre et ledit pansement.

Un suivi visuel de l'état sanitaire de l'arbre est alors réalisé une fois par mois pendant une année.

On s'attend à observer les états sanitaires suivants :
1- Quelques feuilles présentent des signes de flétrissement et/ou de décoloration.
2- Ensemble des feuilles présentent des signes de flétrissement et/ou de décoloration.
3- Quelques feuilles sont sèches et commencent à tomber.
4- Ensemble des feuilles sèches encore présentes sur l'arbre ou tombées.
5- Absence de nouvelles feuilles, pas de rejets présents au niveau de la base du tronc ou de rejets issus des racines : la plante est dévitalisée.

Cependant dans la mesure où l'arbre n'est pas complétement dévitalisé à l'issue de la première année et que des rejets/drageons sont observés, l'étape 2 est réitérée (mise en place d'un nouveau pansement avec solution anti-cicatrisante).

Au terme de 12 mois on constate l'absence de nouvelles feuilles et l'absence de rejets présents au niveau de la base du tronc ou de rejets issus des racines. L'arbre est alors dévitalisé.

**Exemple 4.** Dévitalisation d'un robinier faux-acacia par gel suivi d'une mise en contact du xylème avec une solution aqueuse contenant du chlorure de sodium (NaCl) à saturation (358,5 g par litre d'eau à 20°C) :
Sur un robinier de 3 m de haut et de 15 cm de diamètre à sa base, on coupe au plus ras du tronc à l'aide d'une scie à bois les branches depuis le sol jusqu'à 1m au-dessus du sol.

Dans cette zone élaguée on retire méticuleusement sur une zone s'étendant depuis le sol jusqu'à 50 cm de hauteur et sur la totalité du périmètre de l'arbre, les tissus constituant l'écorce et le cambium à l'aide d'un écorçoir afin de faire apparaitre sur la totalité de la zone le xylème dont l'aspect est lisse et humide juste après écorçage. L'écorçage est réalisé de manière méticuleuse afin de ne pas laisser de tissu autre que le xylème.

Dès l'écorçage terminé, la zone écorcée est enserrée dans la pince d'un gel tube et la température de la zone enserrée est abaissée à -35°C pendant 60 minutes. On laisse alors la température remonter pendant une semaine puis on abaisse de nouveau la température de la zone à -35°C pendant 60 minutes.

Un suivi visuel de l'état sanitaire de l'arbre est alors réalisé une fois par mois pendant une année.

Lorsque l'état sanitaire correspondant à l'état n°2 (Ensemble des feuilles présentent des signes de flétrissement et/ou de décoloration [voir exemple 1]) est constaté, la zone écorcée traitée par le froid est recouverte de plusieurs couches de papier absorbant imbibées à saturation (c'est-à-dire jusqu'à ce que ledit papier absorbant ne retienne plus de liquide) d'une solution de chlorure de sodium à saturation (358,5 g·L⁻¹). Le papier absorbant saturé en chlorure de sodium est alors recouvert d'un film étirable sur plusieurs épaisseurs de manière à protéger le papier absorbant imbibé. Les parties inférieure et supérieure de ce pansement sont alors recouvertes de ruban adhésif de type Chatterton afin d'obturer sur tout le pourtour de l'arbre la zone de jonction entre l'arbre et ledit pansement.

Un suivi visuel de l'état sanitaire de l'arbre est alors réalisé une fois par mois pendant une année.

A chaque vérification de l'état sanitaire du végétal une quantité aléatoire de chlorure de sodium est injectée au travers du pansement hermétique à l'aide d'une seringue afin de recharger ledit pansement hermétique en chlorure de sodium à saturation.

Au bout d'une année on constate que plus aucune feuille ne sont présentes sur l'arbre ni qu'aucun rejet ou drageon n'est apparu.

L'arbre est alors dévitalisé.

### Exemple 5 :

Une procédure identique à celle de l'exemple 4 est réalisée sur un saule de 10 cm de diamètre et d'environ 2 m de haut si ce n'est que la solution anti-cicatrisante appliquée sur le xylème est une solution constituée à 50 % de chlorure de calcium (CaCl₂) à saturation (745 g·L⁻¹) et de 50 % d'une solution aqueuse d'acide citrique à 10 % et de pH égal à 2,3.

La dévitalisation de l'arbre est constatée après 6 semaines de traitement.

**Exemple 6 :** Le peuplier traité à l'exemple 3, dont la frondaison ne présente plus que quelques feuilles, un tronc et des branches sèches, présente au bout de 8 à 12 semaines, à sa base, c'est-à-dire au ras du sol des rejets de diamètre compris entre 1mm et 2,5 cm.

Afin de les éradiquer, lesdits rejets sont enserrés dans la pince d'un gel tube et la température desdits rejets (individuellement ou en bouquet) est abaissée à -35°C pendant 60 minutes. On laisse alors la température remonter pendant une semaine puis on abaisse de nouveau la température de la zone à -35°C pendant 60 minutes.

Un suivi visuel de l'état sanitaire de l'arbre est alors réalisé une fois par mois pendant une année à 2 années.

Au bout d'une année on constate que plus aucune feuille ni plus aucun rejet ou drageon ne sont apparus sur l'arbre.

L'arbre est alors dévitalisé.

**Exemple 7 :** une procédure identique à celle de l'exemple 6 est appliquée au saule traité à l'exemple 5. L'arbre ayant été coupé à la base un bouquet de rejet s'étant développé au bout de 2 à 3 mois. Ledit bouquet de rejets est enserré dans la pince d'un gel tube. La température desdits rejets (en bouquet) est abaissée à -35°C pendant 120 minutes.

La dévitalisation de l'arbre est constatée après 10 semaines de traitement.

## Revendications

1. Procédé de dévitalisation d'un végétal, avantageusement ligneux, **caractérisé en ce que**
- Dans une première étape l'écorce dudit végétal est retirée sur une zone préalablement élaguée, sur tout ou partie du périmètre du tronc dudit végétal ;
- Dans une deuxième étape
∘ soit ladite zone écorcée est mise en contact avec une solution aqueuse anti-cicatrisante, la zone ainsi traitée étant recouverte de manière hermétique et ladite solution aqueuse anti-cicatrisante étant laissée en contact dudit végétal un temps suffisant pour empêcher la cicatrisation de ladite zone traitée et contribuer au processus de dévitalisation ;
∘ soit la température de ladite zone écorcée est abaissée à une température comprise entre -10°C et -50°C, préférentiellement entre -20°C et -40°C très préférentiellement entre -25°C et -35°C.

2. Procédé selon la revendication 1, **caractérisé en ce qu'**il comprend en outre une troisième étape dans laquelle
∘ si à la deuxième étape l'application d'une solution aqueuse anti-cicatrisante sur ladite zone écorcée a été choisie alors la température de ladite zone écorcée et déjà traitée lors de la seconde étape est abaissée à une température comprise entre -10°C et -50°C, préférentiellement entre -20°C et -40°C, très préférentiellement entre -25°C et -35°C ;
∘ si à la deuxième étape la température de ladite zone écorcée a été abaissée à une température comprise entre -10°C et -50°C, préférentiellement entre -20°C et -40°C très préférentiellement entre -25°C et -35°C alors ladite zone écorcée et déjà traitée lors d'une seconde étape est mise en contact avec une solution aqueuse anti-cicatrisante, ladite zone traitée étant recouverte de manière hermétique et ladite solution aqueuse anti-cicatrisante étant laissée en contact dudit végétal un temps suffisant pour empêcher la cicatrisation de ladite zone.

3. Procédé selon l'une quelconque des revendications 1 ou 2, **caractérisé en ce que** ladite zone écorcée s'étend de la jonction végétal/sol jusqu'à une hauteur comprise entre 10 cm et 1 m à partir du sol, de préférence comprise entre 20 et 50 cm, très préférentiellement entre 25 et 35 cm.

4. Procédé selon l'une quelconque des revendications 1 à 3, **caractérisé en ce que** l'écorçage retire les tissus superficiels dudit végétal jusqu'à y compris au moins le cambium.

5. Procédé selon l'une quelconque des revendications 1 à 4, **caractérisé en ce que** l'écorçage laisse le xylème intact.

6. Procédé selon l'une quelconque des revendications 1 à 5, **caractérisé en ce que** ladite solution aqueuse anti-cicatrisante est choisie parmi une
- Solution aqueuse (A) comprenant entre 0,1% et 20 %, préférentiellement entre 1% et 15%, très avantageusement entre 2% et 10 % d'acide (solution aqueuse acide (A));
- Solution aqueuse saline saturée en sels minéraux (B) ;
- Solution composée du mélange des deux solutions précédentes (A+B).

7. Procédé selon la revendication 6, **caractérisé en ce que** ladite solution aqueuse acide comprend au moins un acide choisi parmi, pris seul ou en mélange, choisi parmi, l'acide lactique (C₃H₆O₃), l'acide citrique (C₆H₈O₇), l'acide abscissique (C₁₅H₂₀O₄), l'acide méthanoïque (CH₂O₂), l'acide acétique (CH₃COOH), l'acide salicylique (C₇H₆O₃), l'acide nonanoïque (C₉H₁₈O₂), l'acide butyrique (C₄H₈O₂), l'acide benzoïque (C₇H₆O₂), l'acide hypochloreux (HOCl), l'acide borique (H₃BO₃), l'acide sulfureux (H₂SO₃), avantageusement de l'acide lactique, de l'acide citrique ou de l'acide acétique ou de l'acide lactique, très avantageusement de l'acide acétique ou de l'acide lactique, encore plus avantageusement de l'acide acétique, en une proportion pouvant être comprise entre 0,1% et 20%, préférentiellement entre 1% et 15%, très avantageusement entre 2% et 10% d'acide.

8. Procédé selon l'une quelconque des revendications 6 ou 7, **caractérisé en ce que** ladite solution aqueuse acide est à un pH compris entre 1 et 6,9, préférentiellement entre 2 et 5, très avantageusement entre 2,8 et 3.

9. Procédé selon la revendication 6, **caractérisé en ce que** la solution aqueuse saline saturée en sels minéraux comprend au moins un sel minéral choisi parmi le Calcium (Ca), le Magnésium (Mg), le Potassium (K), le Sodium (Na), le Chlore (Cl), l'Iode (I) préférentiellement le Calcium (Ca), le Magnésium (Mg), le Potassium (K), le Sodium (Na), le Chlore (Cl) ou encore l'Iode (I), très préférentiellement du Sodium (Na), du Chlore (Cl) ou encore du Potassium, encore plus préférentiellement du Sodium (Na).

10. Procédé selon la revendication 6, **caractérisé en ce que** la solution aqueuse saline saturée en sels minéraux comprend au moins un sel minéral en couple cation/anion formant un sel neutre, préférentiellement choisi parmi les couples Chlorure de Sodium (NaCl), Chlorure de Calcium (CaCl₂), Iodure de Sodium (Nal), Chlorure de potassium (KCl), Chlorure de magnésium (MgCl₂), Iodure de Potassium (Kl), Bicarbonate de Sodium (NaHCo₃), préférentiellement du Chlorure de Sodium (NaCl) ou du chlorure de Potassium (KCI), très, préférentiellement du Chlorure de Sodium (NaCI).

11. Procédé selon la revendication 6, **caractérisé en ce que** la solution composée du mélange d'une solution aqueuse acide (A) et d'une solution aqueuse saline saturée en sels minéraux (B) est en un rapport A/B (vol/vol) comprise entre 1/99 et 99/1, préférentiellement entre 25/75 et 75/25, encore plus préférentiellement 50/50.

12. Procédé selon la revendication 1, **caractérisé en ce qu'**à la deuxième étape la mise en contact de la zone écorcée avec une solution aqueuse anti-cicatrisante se fait par imbibition d'un matériau absorbant, préférentiellement choisi parmi du papier, du tissu, un matériau spongieux, ou encore du papier absorbant, préférentiellement du papier absorbant, positionné au contact de la partie écorcée du végétal avec ladite solution aqueuse anti-cicatrisante.

13. Procédé selon la revendication 1, **caractérisé en ce qu'**à la deuxième étape la zone traitée avec la solution anti-cicatrisante est recouverte de manière hermétique avec du film plastique, du film étirable, de la bâche, de la toile goudronnée, du ruban adhésif, préférentiellement du film étirable.

14. Procédé selon l'une quelconque des revendications 1 à 13, **caractérisé en ce qu'**il comprend en outre une étape d'abaissement de la température des rejets apparus sur ledit végétal préalablement dévitalisé, à une température comprise entre -10°C et -50°C, préférentiellement entre -20°C et -40°C très préférentiellement entre -25°C et -35°C.

15. Procédé selon la revendication 14, **caractérisé en ce que** lesdits rejets non coupés sont traités individuellement ou de manière groupée en un ou plusieurs bouquet(s), préférentiellement selon l'invention de manière groupée en un ou plusieurs bouquet(s).

16. Procédé selon l'une quelconque des revendications 1 à 15, **caractérisé en ce que** l'étape d'abaissement de la température "du végétal écorcé" ou desdits rejets est réalisée en une seule fois ou en plusieurs fois séparées par un temps de remontée en température compris entre 1 heure et 1 mois, préférentiellement 15 jours.

17. Procédé selon l'une quelconque des revendications 1 à 16, **caractérisé en ce que** l'étape d'abaissement de la température "du végétal écorcé" ou desdits rejets est réalisée en plusieurs fois, le nombre de fois étant compris entre 2 et 10 fois, avantageusement entre 2 et 4 fois, préférentiellement 2 fois.

18. Procédé selon l'une quelconque des revendications 1 à 17, **caractérisé en ce que** l'étape d'abaissement de la température "du végétal écorcé" ou desdits rejets est réalisée pendant un temps total compris entre 1 minute et 180 minutes, préférentiellement entre 10 minutes et 150 minutes, très préférentiellement entre 30 minutes et 120 minutes.

19. Procédé selon l'une quelconque des revendications 1 à 17, **caractérisé en ce que** une sous-étape d'abaissement de la température "du végétal écorcé" ou desdits rejets est réalisée pendant un temps compris entre 1 à 60 minutes, préférentiellement de 10 à 45 minutes, très préférentiellement de 30 minutes.

20. Procédé d'éradication des rejets apparus sur un végétal, avantageusement ligneux, préalablement desséché, **caractérisé en ce que** la température des rejets apparus sur ledit végétal préalablement desséché et/ou coupé est abaissée à une température comprise entre -10°C et -50°C, préférentiellement entre -20°C et -40°C très préférentiellement entre -25°C et -35°C.

## Patentansprüche

1. Verfahren zur Devitalisierung einer Pflanze, das vorteilhafterweise holzig ist, **dadurch gekennzeichnet, dass**
- bei einem ersten Schritt die Rinde der Pflanze auf einer vorab entästeten Zone auf dem gesamten oder einem Teil des Umfangs des Stammes der Pflanze entfernt wird;
- bei einem zweiten Schritt
• entweder die entrindete Zone mit einer heilungshemmenden wässrigen Lösung in Kontakt gebracht wird, wobei die derart behandelte Zone hermetisch abgedeckt und die heilungshemmende wässrige Lösung mit der Pflanze eine Zeit lang in Kontakt gelassen wird, die ausreicht, um die Heilung der behandelten Zone zu verhindern und zum Devitalisierungsprozess beizutragen;
• oder die Temperatur der entrindeten Zone auf eine Temperatur abgesenkt wird, die zwischen -10 °C und -50 °C, vorzugsweise zwischen -20 °C und -40 °C, besonders bevorzugt zwischen -25 °C und -35 °C enthalten ist.

2. Verfahren nach Anspruch 1, **dadurch gekennzeichnet, dass** es weiter einen dritten Schritt umfasst, bei dem
• falls der zweite Anwendungsschritt einer heilungshemmenden wässrigen Lösung auf der entrindeten Zone ausgewählt wurde, obwohl die Temperatur der entrindeten und bereits bei dem zweiten Schritt behandelten Zone auf eine Temperatur zwischen -10 °C und -50 °C, vorzugsweise zwischen -20 °C und -40 °C, besonders bevorzugt zwischen -25 °C und -35 °C abgesenkt ist;
• falls bei dem zweiten Schritt die Temperatur der entrindeten Zone auf eine Temperatur zwischen -10 °C und -50 °C, vorzugsweise zwischen -20 °C und -40 °C, besonders bevorzugt zwischen -25 °C und -35 °C abgesenkt worden ist, die entrindete und bei einem zweiten Schritt bereits behandelte Zone mit einer heilungshemmenden wässrigen Lösung in Kontakt gebracht wird, wobei die behandelte Zone hermetisch abgedeckt und die heilungshemmende wässrige Zone mit der Pflanze eine Zeit lang in Kontakt gelassen wird, die ausreicht, um die Heilung der Zone zu verhindern.

3. Verfahren nach einem der Ansprüche 1 oder 2, **dadurch gekennzeichnet, dass** sich die entrindete Zone von dem Übergang Pflanze/Boden bis zu einer Höhe erstreckt, die zwischen 10 cm und 1 m ausgehend von dem Boden, vorzugsweise zwischen 20 und 50 cm, besonders bevorzugt zwischen 25 und 35 cm enthalten ist.

4. Verfahren nach einem der Ansprüche 1 bis 3, **dadurch gekennzeichnet, dass** das Entrinden die oberflächlichen Gewebe der Pflanze bis einschließlich mindestens des Kambiums entfernt.

5. Verfahren nach einem der Ansprüche 1 bis 4, **dadurch gekennzeichnet, dass** das Entrinden das Xylem unversehrt lässt.

6. Verfahren nach einem der Ansprüche 1 bis 5, **dadurch gekennzeichnet, dass** die heilungshemmende wässrige Lösung ausgewählt wird aus einer
- wässrigen Lösung (A), die zwischen 0,1 % und 20 %, vorzugsweise zwischen 1 % und 15 %, besonders bevorzugt zwischen 2 % und 10 % Säure (wässrige Säurelösung (A)) umfasst;
- wässrigen Kochsalzlösung, die mit Mineralsalzen gesättigt ist (B);
- Lösung, die aus dem Gemisch der beiden vorhergehenden Lösungen (A + B) zusammengesetzt ist.

7. Verfahren nach Anspruch 6, **dadurch gekennzeichnet, dass** die wässrige Säurelösung mindestens eine Säure umfasst, die, allein oder im Gemisch genommen, ausgewählt wird aus Milchsäure (C₃H₆O₃), Zitronensäure (C₆N₈O₇), Abcisinsäure (C₁₅H₂₀O₄), Methansäure (CH₂O₂), Essigsäure (CH₃COOH), Salicylsäure (C₇H₆O₃), Nonansäure (C₉H₁₈O₂), Buttersäure (C₄H₈O₂), Benzoesäure (C₇H₆O₂), hypochloriger Säure (HOCI), Borsäure (H₃BO₃), Schwefelsäure (H₂SO₃), vorteilhafterweise Milchsäure, Zitronensäure oder Essigsäure oder Milchsäure, besonders vorteilhafterweise Essigsäure oder Milchsäure, noch vorteilhafterweise Essigsäure, in einem Verhältnis, das zwischen 0,1 % und 20 %, vorzugsweise zwischen 1 % und 15 %, besonders vorteilhafterweise zwischen 2 % und 10 % Säure enthalten sein kann.

8. Verfahren nach einem der Ansprüche 6 oder 7, **dadurch gekennzeichnet, dass** die wässrige Säurelösung einen pH aufweist, der zwischen 1 und 6,9, vorzugsweise zwischen 2 und 5, besonders vorteilhafterweise zwischen 2,8 und 3 enthalten ist.

9. Verfahren nach Anspruch 6, **dadurch gekennzeichnet, dass** die wässrige Kochsalzlösung, die mit Mineralsalzen gesättigt ist, mindestens ein Mineralsalz umfasst, das ausgewählt wird aus Calcium (Ca), Magnesium (Mg), Kalium (K), Natrium (Na), Chlor (Cl), Iod (I), vorzugsweise Calcium (Ca), Magnesium (Mg), Kalium (K), Natrium (Na), Chlor (Cl) oder auch Iod (I), besonders bevorzugt aus Natrium (Na), Chlor (Cl) oder auch Kalium, noch bevorzugter aus Natrium (Na).

10. Verfahren nach Anspruch 6, **dadurch gekennzeichnet, dass** die wässrige Kochsalzlösung, die mit Mineralsalzen gesättigt ist, mindestens ein Mineralsalz mit Kation-/Anion-Paar umfasst, das ein neutrales Salz bildet, das vorzugsweise aus den Paaren Natriumchlorid (NaCl), Calciumchlorid (CaCl₂), Natriumiodid (NaI), Kaliumchlorid (KCl), Magnesiumchlorid (MgCl₂), Kaliumiodid (Kl), Natriumbicarbonat (NaHCO₃), vorzugsweise Natriumchlorid (NaCl) oder Kaliumchlorid (KCl), besonders bevorzugt Natriumchlorid (NaCl) ausgewählt wird.

11. Verfahren nach Anspruch 6, **dadurch gekennzeichnet, dass** die Lösung, die aus dem Gemisch einer wässrigen Säurelösung (A) und einer wässrigen Kochsalzlösung, die mit Mineralsalzen gesättigt ist (B) zusammengesetzt ist, ein Verhältnis A/B (Vol/Vol) zwischen 1/99 und 99/1, vorzugsweise zwischen 25/75 und 75/25, noch bevorzugter 50/50 aufweist.

12. Verfahren nach Anspruch 1, **dadurch gekennzeichnet, dass** bei dem zweiten Schritt das Inkontaktbringen der entrindeten Zone mit einer heilungshemmenden wässrigen Lösung durch Vollsaugen eines absorbierenden Materials erfolgt, das vorzugsweise aus Papier, Gewebe, einem schwammigen Material oder auch absorbierendem Papier, vorzugsweise absorbierendem Papier ausgewählt wird, das in Kontakt mit dem entrindeten Teil der Pflanze mit der heilungshemmenden wässrigen Lösung positioniert wird.

13. Verfahren nach Anspruch 1, **dadurch gekennzeichnet, dass** bei dem zweiten Schritt die Zone, die mit der heilungshemmenden Lösung behandelt wird, hermetisch mit Kunststofffolie, Streckfolie, Plane, Teerleinwand, Klebeband, vorzugsweise Streckfolie abgedeckt wird.

14. Verfahren nach einem der Ansprüche 1 bis 13, **dadurch gekennzeichnet, dass** es weiter einen Schritt des Absenkens der Temperatur der Schösslinge, die auf der zuvor devitalisierten Pflanze erschienen sind, auf eine Temperatur zwischen -10 °C und -50 °C, vorzugsweise zwischen -20 °C und -40 °C, besonders bevorzugt zwischen -25 °C und -35 °C, umfasst.

15. Verfahren nach Anspruch 14, **dadurch gekennzeichnet, dass** die nicht abgeschnittenen Schösslinge einzeln oder zu einem oder mehreren Sträußen zusammengefasst, vorzugsweise erfindungsgemäß zu einem oder mehreren Sträußen zusammengefasst, behandelt werden.

16. Verfahren nach einem der Ansprüche 1 bis 15, **dadurch gekennzeichnet, dass** der Schritt des Absenkens der Temperatur der "entrindeten Pflanze" oder der Schösslinge auf einmal oder mehrere Male, die von einer Temperaturanstiegszeit, die zwischen 1 Stunde und 1 Monat enthalten ist, vorzugsweise von 15 Tagen, getrennt sind, ausgeführt wird.

17. Verfahren nach einem der Ansprüche 1 bis 16, **dadurch gekennzeichnet, dass** der Schritt des Absenkens der "entrindeten Pflanze" oder der Schösslinge in mehreren Malen ausgeführt wird, wobei die Häufigkeit zwischen 2 und 10 Mal, vorteilhafterweise zwischen 2 und 4 Mal, bevorzugt 2 Mal enthalten ist.

18. Verfahren nach einem der Ansprüche 1 bis 17, **dadurch gekennzeichnet, dass** der Schritt des Absenkens der Temperatur der "entrindeten Pflanze" oder der Schösslinge eine Gesamtzeit lang ausgeführt wird, die zwischen 1 Minute und 180 Minuten, vorzugsweise zwischen 10 Minuten und 150 Minuten, besonders bevorzugt zwischen 30 Minuten und 120 Minuten enthalten ist.

19. Verfahren nach einem der Ansprüche 1 bis 17, **dadurch gekennzeichnet, dass** der Unterschritt des Absenkens der Temperatur der "entrindeten Pflanze" oder der Schösslinge eine Gesamtzeit lang ausgeführt wird, die zwischen 1 Minute und 60 Minuten, vorzugsweise zwischen 10 Minuten und 45 Minuten, besonders bevorzugt bei 30 Minuten enthalten ist.

20. Verfahren zur Beseitigung von Schösslingen, die auf einer Pflanze erschienen sind, die vorteilhafterweise holzig ist, die vorab ausgetrocknet wurde, **dadurch gekennzeichnet, dass** die Temperatur der Schösslinge, die auf der aus getrockneten und/oder geschnittenen Pflanze erschienen sind, auf eine Temperatur zwischen -10 °C und -50 °C, vorzugsweise zwischen -20 °C und -40 °C, besonders bevorzugt zwischen -25 °C und -35 °C abgesenkt wird.

## Claims

1. Method for devitalising plants, advantageously ligneous plants, **characterised in that**
- In a first step the bark is stripped from said plant over a previously pruned area, over all or a portion of the perimeter of the trunk of said plant;
- In a second step
∘ either said stripped area is put into contact with an aqueous anti-healing solution, the area thus treated being hermetically covered and said aqueous anti-healing solution being left in contact with said plant for a time sufficient to prevent the healing of said treated area and contribute to the process of devitalisation;
∘ or the temperature of said stripped area is lowered to a temperature comprised between -10°C and -50°C, preferably between -20°C and -40°C very preferably between -25°C and -35°C.

2. Method according to claim 1, **characterised in that** it further comprises a third step wherein
∘ if at the second step the application of an aqueous anti-healing solution on said stripped area was chosen then the temperature of said stripped area and already treated during the second step is lowered to a temperature comprised between -10°C and -50°C, preferably between -20°C and -40°C, very preferably between -25°C and -35°C;
∘ if at the second step the temperature of said stripped area was lowered to a temperature comprised between -10°C and -50°C, preferably between -20°C and -40°C very preferably between -25°C and -35°C then said stripped area and already treated during a second step is put into contact with an aqueous anti-healing solution, said treated area being hermetically covered and said aqueous anti-healing solution being left in contact with said plant for a time sufficient to prevent said area from healing.

3. Method according to any one of claims 1 or 2, **characterised in that** said stripped area extends from the plant/ground junction to a height comprised between 10cm and 1m from the ground, preferably comprised between 20 and 50cm, very preferably between 25 and 35cm.

4. Method according to any one of claims 1 to 3, **characterised in that** the barking strips the superficial tissues from said plant including to at least the cambium.

5. Method according to any one of claims 1 to 4, **characterised in that** the barking leaves the xylem intact.

6. Method according to any one of claims 1 to 5, **characterised in that** said aqueous anti-healing solution is chosen from among an
- Aqueous solution (A) comprising between 0.1% and 20%, preferably between 1% and 15%, very advantageously between 2% and 10% of acid (acidic aqueous solution (A));
- Saline aqueous solution saturated with mineral salts (B);
- Solution comprised of the mixture of the two preceding solutions (A+B).

7. Method according to claim 6, **characterised in that** said acidic aqueous solution comprises at least one acid chosen from among, taken individually or in a mixture, chosen from among, lactic acid (C₃H₆O₃), citric acid (C₆H₈O₇), abscisic acid (C₁₅H₂₀O₄), methanoic acid (CH₂O₂), acetic acid (CH₃COOH), salicylic acid (C₇H₆O₃), nonanoic acid (C₉H₁₈O₂), butyric acid (C₄H₈O₂), benzoic acid (C₇H₆O₂), hypochlorous acid (HOCl), boric acid (H₃BO₃), sulphurous acid (H₂SO₃), advantageously lactic acid, citric acid or acetic acid or lactic acid, very advantageously acetic acid or lactic acid, even more advantageously acetic acid, in a proportion that can be comprised between 0.1% and 20%, preferably between 1% and 15%, very advantageously between 2% and 10% of acid.

8. Method according to any one of claims 6 or 7, **characterised in that** said acidic aqueous solution is at a pH comprised between 1 and 6.9, preferably between 2 and 5, very advantageously between 2.8 and 3.

9. Method according to claim 6, **characterised in that** the saline aqueous solution saturated with mineral salts comprises at least one mineral salt chosen from among Calcium (Ca), Magnesium (Mg), Potassium (K), Sodium (Na), Chlorine (CI), iodine (I) preferably Calcium (Ca), Magnesium (Mg), Potassium (K), Sodium (Na), Chlorine (CI) or iodine (I), very preferably Sodium (Na), Chlorine (CI) or Potassium, even more preferably Sodium (Na).

10. Method according to claim 6, **characterised in that** the saline aqueous solution saturated with mineral salts comprises at least one mineral salt in a cation/anion pair forming a neutral salt, preferably chosen from among the pairs Sodium Chloride (NaCl), Calcium Chloride (CaCl₂), Sodium Iodide (Nal), Potassium Chloride (KCl), Magnesium Chloride (MgCl₂), Potassium Iodide (Kl), Sodium Bicarbonate (NaHCo₃), preferably Sodium Chloride (NaCl) or Potassium Chloride (KCI), very preferably Sodium Chloride (NaCl).

11. Method according to claim 6, **characterised in that** the solution comprised of the mixture of an acidic aqueous solution (A) and of a saline aqueous solution saturated with mineral salts (B) is in a A/B (vol/vol) ratio comprised between 1/99 and 99/1, preferably between 25/75 and 75/25, even more preferably 50/50.

12. Method according to claim 1, **characterised in that** at the second step the putting into contact of the stripped area with an aqueous anti-healing solution is done by imbibition of an absorbent material, preferably chosen from among paper, tissue, a spongy material, or absorbent paper, preferably absorbent paper, positioned in contact with the stripped portion of the plant with said aqueous anti-healing solution.

13. Method according to claim 1, **characterised in that** at the second step the area treated with the anti-healing solution is hermetically covered with plastic film, stretch film, tarp, tarpaulin, adhesive tape, preferably stretch film.

14. Method according to any one of claims 1 to 13, **characterised in that** it further comprises a step of lowering the temperature of the shoots that appeared on said previous devitalised plant, at a temperature comprised between -10°C and -50°C, preferably between -20°C and -40°C very preferably between -25°C and -35°C.

15. Method according to claim 14, **characterised in that** said uncut shoots are treated individually or in a manner grouped into one or more bouquets, preferably according to the invention in a manner grouped into one or more bouquets.

16. Method according to any one of claims 1 to 15, **characterised in that** the step of lowering the temperature "of the stripped plant" or of said shoots is carried out at one time or in several times separated by a time for the temperature to rise again comprised between 1 hour and 1 months, preferably 15 days.

17. Method according to any one of claims 1 to 16, **characterised in that** the step of lowering the temperature "of the stripped plant" or of said shoots is carried out in several times, with the number of times being comprised between 2 and 10 times, advantageously between 2 and 4 times, preferably 2 times.

18. Method according to any one of claims 1 to 17, **characterised in that** the step of lowering the temperature "of the stripped plant" or of said shoots is carried out during a total time comprised between 1 minute and 180 minutes, preferably between 10 minutes and 150 minutes, very preferably between 30 minutes and 120 minutes.

19. Method according to any one of claims 1 to 17, **characterised in that** a sub-step of lowering the temperature " of the stripped plant " or of said shoots is carried out during a time comprised between 1 to 60 minutes, preferably from 10 to 45 minutes, very preferably 30 minutes.

20. Method of eradicating shoots appearing on a plant, advantageously ligneous plants, previously dried, **characterised in that** the temperature of the shoots appearing on said previously dried and/or cut plant is lowered to a temperature comprised between -10°C and -50°C, preferably between -20°C and -40°C very preferably between -25°C and -35°C.
